# EUROPÄISCHE PATENTANMELDUNG

(11) **EP 0 656 633 A1**
(43) Veröffentlichungstag der Anmeldung: **07.06.1995**
(21) Anmeldenummer: 95100512.3
(22) Anmeldetag: 16.01.1995
(51) Int. Cl.: G21C 15/18, G21C 1/08

(54) **Kernbehälter eines Siedewasser-Reaktors sowie Verfahren zur Ertüchtigung eines Kernbehälters**

(71) Anmelder: SIEMENS AKTIENGESELLSCHAFT, D-80333 München (DE)
(72) Erfinder: Hümpfner, Peter, D-63867 Johannesberg (DE)

(57) **Zusammenfassung**

Die Erfindung betrifft einen Kernbehälter (1) eines Siedewasser-Reaktors mit einem Kernmantel (2), einem doppelwandigen kuppelförmigen Kerndeckel (3) und einer Notkühleinrichtung (10). Die Notkühleinrichtung (10) weist einen ersten Sprühverteiler (4), der über die Innenwandung (3a) des Kerndeckels (3) verteilt ist, und einen zweiten Sprühverteiler (5), der weitgehend in einer Ebene (8) senkrecht zu einer Hauptachse (7) des Kernmantels (2) an der Innenwandung (3a) angeordnet ist, auf. Die Erfindung betrifft weiterhin ein Verfahren zur Ertüchtigung eines Kernbehälters (1), der einen bestrahlten Kernmantel (2) und eine Notkühleinrichtung (10) aufweist, wobei zu einem bereits bestehenden, an der Innenwandung (3a) des Kerndeckels (3) angeordneten Sprühverteiler (4) ein weiterer diversitärer Sprühverteiler (5) hinzugefügt wird.

## Beschreibung

Die Erfindung betrifft einen Kernbehälter eines Siedewasser-Reaktors mit einem Kernmantel, einem doppelwandigen kuppelförmigen Kerndeckel und einer Notkühleinrichtung, wobei die Notkühleinrichtung einen Sprühverteiler aufweist, der über die Innenwandung des Kerndeckels verteilt ist. Die Erfindung betrifft weiterhin ein Verfahren zur Ertüchtigung eines Kernbehälters eines Siedewasser-Reaktors.

In einem Kernreaktor, beispielsweise einem Siedewasser-Reaktor, sind für einen sicheren Betrieb sowie für die sichere Beherrschung anomaler Betriebszustände mehrere Sicherheitssysteme vorhanden. Gemaß geltender Bestimmungen sind Sicherheitssysteme vielfach redundant und diversitär ausgeführt. Zu den Sicherheitssystemen zählen unter anderem Notkühleinrichtungen, über die bei anomalen Betriebszuständen, wie einem Rohrleitungsbruch mit Verlust an Kernkühlmittel, eine Kühlung des in dem Reaktordruckbehälter angeordneten Reaktorkerns sichergestellt wird. Der Reaktorkern wird in der Regel von einem Kernmantel und einem Kerndeckel, welche einen Kernbehälter bilden, umgeben. Zu den Notkühleinrichtungen gehört beispielsweise ein Kernsprühsystem, durch das Notkühlmittel, insbesondere Wasser, unmittelbar auf den Reaktorkern gesprüht werden kann.

Aufgabe der Erfindung ist es, einen Kernbehälter mit einer diversitären Notkühleinrichtung anzugeben. Eine weitere Aufgabe der Erfindung ist es, ein verfahren zu Ertüchtigung eines über einen längeren Zeitraum betriebenen Kernreaktors anzugeben, bei dem eine diversitäre Notkühleinrichtung bereitgestellt wird.

Erfindungsgemäß wird die auf einen Kernbehälter gerichtete Aufgabe gelöst durch einen Kernbehälter eines Siedewasser-Reaktors mit einem Kernmantel, einem doppelwandigen kuppelförmigen Kerndeckel und einer Notkühleinrichtung, wobei der Kernmantel entlang einer Hauptachse gerichtet ist, der Kerndeckel auf den Kernmantel aufgesetzt ist und die Notkühleinrichtung einen ersten Sprühverteiler, der über die Innenwandung des Kerndeckels verteilt ist, und einen zweiten Sprühverteiler, der im wesentlichen in einer Ebene senkrecht zur Hauptachse an der Innenwandung angeordnet ist, aufweist.

Der Kerndeckel ist doppelwandig in Form einer sandwichartigen Konstruktion aufgebaut und hat zwischen der Innenwandung und der Außenwandung einen Zwischenraum, der als Verteilerkasten für Zuführleitungen von Notkühlmittel dient. An diesen Zwischenraum sind ca. 200 Sprühdüsen angeschweißt, die Bestandteil des ersten Sprühverteilers sind. Der erste Sprühverteiler ist über die Notkühlmittel-Zuführleitungen, die von den Sprühdüsen durch den Zwischenraum des Kerndeckels aus dem Kernbehälter herauslaufen, an ein Reservoir für Notkühlmittel angeschlossen. Der erste Sprühverteiler der Notkühleinrichtung ist so ausgelegt, daß im Falle eines anomalen Betriebszustandes, beispielsweise bei einem Bruch in einer Rohrleitung mit einem Austritt von Kernkühlmittel, eine ausreichende Notkühlung des Reaktorkerns gewährleistet ist. Dies wird als eine 100 %-ige Ausführung eines Notkühlsystems bezeichnet. Mit dem zweiten Sprühverteiler wird ein zweifach redundantes Sprühverteilersystem für den Kernbehälter geschaffen, welches vorzugsweise an sich alleine schon vollständige Gewährleistung der Notkühlung des Reaktorkerns bietet. Der zweite Sprühverteiler ist an der Innenwandung des Kerndeckels, insbesondere mittels Schraubenverbindungen an Tragkonsolen für die Notkühlmittel-Zuführungsleitungen, befestigt.

Bevorzugt ist jeder der Sprühverteiler an jeweils unterschiedliche Notkühlmittel-Zuführungsleitungen angeschlossen, insbesondere ist die Notkühleinrichtung an vier unterschiedliche Notkühlmittel-Einspeise-Stränge angeschlossen, wobei von jedem der Einspeise-Stränge zwei Notkühlmittel-Zufuhrungsleitungen abzweigen.

Bevorzugt ist jeder Sprühverteiler an mindestens zwei, insbesondere vier, Notkühlmittel-Zuführungsleitungen angeschlossen. Der erste Sprühverteiler kann hierbei über die Zuführungsleitungen an die ersten beiden Einspeise-Stränge und der zweite Sprühverteiler an die beiden anderen Einspeise-Stränge angeschlossen sein. In den Zuführungsleitungen können Rückschlagarmaturen vorhanden sein, die bei einem Bruch in einer Zuführungsleitung eine Rückströmung von Notkühlmittel aus dem jeweils anderen Einspeise-Strang verhindern.

Der zweite Sprühverteiler weist mindestens ein Kreisringsegment auf, an dem Sprühdüsen angeordnet sind. Das Kreisringsegment hat bevorzugt einen Winkel von 100° bis 140°, insbesondere etwa 120°. Es kann gegebenenfalls auch als ein vollständiger Kreisring ausgeführt sein.

Vorzugsweise hat der zweite Sprühverteiler zwei Kreissegmente, die jeweils mit zwei Notkühlmittel-Zuführungsleitungen verbunden sind.

Die auf ein Verfahren zur Ertüchtigung eines Kernbehälters eines Siedewasser-Reaktors gerichtete Aufgabe wird für einen Kernbehälter mit einem bestrahlten Kernmantel, der entlang einer Hauptachse gestreckt ist, mit einem doppelwandigen kuppelförmigen Kerndeckel, der auf den Kernmantel aufgesetzt ist, und mit einer Notkühleinrichtung, die einen an der Innenwandung des Kerndeckels angeordneten ersten Sprühverteiler aufweist, dadurch gelöst, daß die Notkühleinrichtung durch einen zweiten, zu dem ersten Sprühverteiler diversitären, Sprühverteiler ergänzt wird.

Hierdurch wird eine Ertüchtigung oder Nachrüstung eines Kernbehälters mit einem zusätzlichen diversitären und redundanten Notkühlsystem erreicht, ohne aufwendige Austauschmaßnahmen vorzunehmen. Insbesondere wird von einem kompletten Austausch des Kerndeckels, welcher neben der Notkühleinrichtung auch die Dampfabscheider aufweist, abgesehen. Durch die Nutzung des bereits vorhandenen Kerndeckels wird nur ein Minimum an neuen Teilen benötigt, und eine aufwendige Entsorgung vorhandener aktivitierter und kontaminierter Teile des Kerndeckels entfällt. Zudem kann die Zeitdauer für die Nachrüstung kurz gehalten werden, so daß längere Stillstandszeiten des Siedewasser-Reaktors vermieden werden.

Vorzugsweise wird der diversitäre zweite Sprühverteiler in einer Ebene senkrecht zur Hauptachse an der Innenwandung des Kerndeckels befestigt. Die Befestigung des zweiten Sprühverteilers, welcher bevorzugt aus zwei Kreisringsegmenten besteht, erfolgt durch Schraubenverbindungen an vorhandenen Tragkonsolen für die Notkühlmittel-Zuführungsleitungen, welche innerhalb des Kerndeckels verlaufen. Der zweite Sprühverteiler weist eine Mehrzahl von Einsprühdüsen auf, die in das Innere des Kernbehälters gerichtet sind.

Bevorzugt werden von einer Mehrzahl, insbesondere vier, vorhandenen Notkühlmitteleinspeisesträngen, die vor Beginn der Ertüchtigung sämtlich an den ersten Sprühverteiler angeschlossen sind, zwei von dem ersten Sprühverteiler abgetrennt und mit dem zweiten Sprühverteiler verbunden. Hierdurch werden ohne wesentliche Änderungen an der Zuführung für Notkühlmittel sowohl der erste Sprühverteiler als auch der zweite Sprühverteiler mit einem Reservoir für das Notkühlmittel verbunden, so daß eine ausreichende Zuführung von Notkühlmittel in jeden der Sprühverteiler gewährleistet ist.

Vorzugsweise erfolgt gleichzeitig mit der Nachrüstung des Kernbehälters mit einem zweiten Sprühverteiler eine Ertüchtigung des Kernmantels, indem der bestrahlte Kernmantel durch einen unbestrahlten Kernmantel ausgetauscht wird. Gegenüber einem vollständigen Austausch des Kernmantels und des Kerndeckels hat dies den Vorteil, daß weniger kontaminierte und aktivierte Komponenten anfallen. Hierdurch wird eine aufwendige Entsorgung vermieden.

Anhand der Zeichnung werden Ausführungsbeispiele des Kernbehälters sowie das Verfahrens näher erläutert. Es zeigen:
- FIG 1: einen Längsschnitt durch einen Reaktor-Druckbehälter mit einem Kernbehälter,
- FIG 2: einen Querschnitt durch den Kerndeckel entlang einer Ebene senkrecht zur Hauptachse des Kernmantels,
- FIG 3: eine Detaildarstellung einer Anordnung von Sprühdüsen,
- FIG 4: eine Detaildarstellung einer Befestigung für den zweiten kreisringsegmentartigen Sprühverteiler,
- FIG 5: eine schematische Darstellung des ersten Sprühverteilers und
- FIG 6: eine schematische Darstellung des zweiten Sprühverteilers.

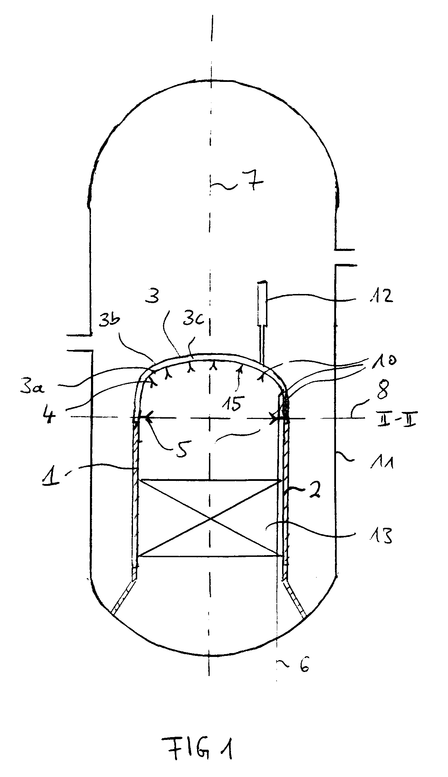

FIG 1 zeigt schematisch einen Reaktor-Druckbehälter 11 eines Siedewasser-Reaktors, welcher entlang einer Hauptachse 7 gestreckt ist, und in seinem Inneren einen Kernbehälter 1 aufweist. Der Kernbehälter 1 hat einen Kernmantel 2 und einen Kerndeckel 3, wobei der Kernmantel 2 ebenfalls entlang der Hauptachse 7 gestreckt und zu dieser weitgehend rotationssymmetrisch ist. Der Kernmantel 2 sowie der Kerndeckel 3 in der Ebene 8 haben jeweils einen Durchmesser von etwa vier Metern. Der Kernmantel 2 umschließt den Reaktorkern 13, welcher die nicht dargestellten Brennelemente enthält. Der Kerndeckel 3 ist doppelwandig und kuppelförmig ausgebildet, auf den Kernmantel 2 aufgesetzt und mit diesem fest verbunden, beispielsweise verspannt. Auf dem Kerndeckel 3 sind Dampfabscheider 12, durch die Wasserdampf aus dem Kernbehälter 1 ausströmt, angeordnet, wobei der Anschaulichkeit halber nur ein Dampfabscheider 12 dargestellt ist. Der Kerndeckel 3 hat eine kuppelförmige Innenwandung 3a, an der eine Vielzahl von Sprühdüsen 15, beispielsweise bis zu 200, angeordnet sind, die zu einem ersten Sprühverteiler 4 gehören. Die Innenwandung 3a wird von einer Außenwandung 3b umgeben, wobei zwischen Innenwandung 3a und Außenwandung 3b ein Zwischenraum 3c verbleibt, in dem Notkühlmittel-Zuführungsleitungen 6 geführt sind, welche mit dem ersten Sprühverteiler 4 verbunden sind. Die Notkühlmittel-Zuführungsleitungen 6 sind aus dem Kerndeckel 3 sowie dem Reaktor-Druckbehälter 11 herausgeführt und über nicht dargestellte Notkühlmittel-Einspeisestränge mit einem ebenfalls nicht dargestellten Reservoir für das Notkühlmittel verbunden. In einer Ebene 8, die senkrecht zur Hauptachse 7 liegt, ist an der Innenwandung 3a des Kerndeckels 3 geodätisch unterhalb des ersten Sprühverteilers 4 ein zweiter Sprühverteiler 5 angeordnet, welcher aus zwei Kreisringsegmenten mit einem jeweiligen Winkel von 120° besteht. Der erste Sprühverteiler 4, der zweite Sprühverteiler 5 sowie die mit den Sprühverteilern 4,5 verbundenen Notkühlmittel-Zuführungsleitungen 6 gehören zu einer Notkühleinrichtung 7, insbesondere einer Kernsprüheinrichtung, durch die im Falle eines Rohrleitungsbruches mit einem Verlust von Kernkühlmittel Notkühlmittel in den Kernbehälter 1 eingespeist werden kann, um eine ausreichende Kühlung des Reaktorkerns 13 zu gewährleisten. Im Rahmen einer Ertüchtigung und Nachrüstung eines Kernbehälters 1, der einen Kernmantel 2 und einen doppelwandigen Kerndeckel 3 mit nur einem Sprühverteiler 4 aufweist, kann durch Austausch des bestrahlten Kernmantels 2 und durch Nachrüstung des Kerndeckels 3 mit einem zweiten Sprühverteiler 5 der über einen längeren Zeitraum radioaktiver Strahlung ausgesetzte Kernbehälter 1 geltenden nationalen Bestimmungen angepaßt werden. Durch eine Nachrüstung des Kerndeckels 3 ist deutlich weniger radioaktiv bestrahltes Material zu entsorgen als bei einem vollständigem Austausch des Kerndeckels 3.

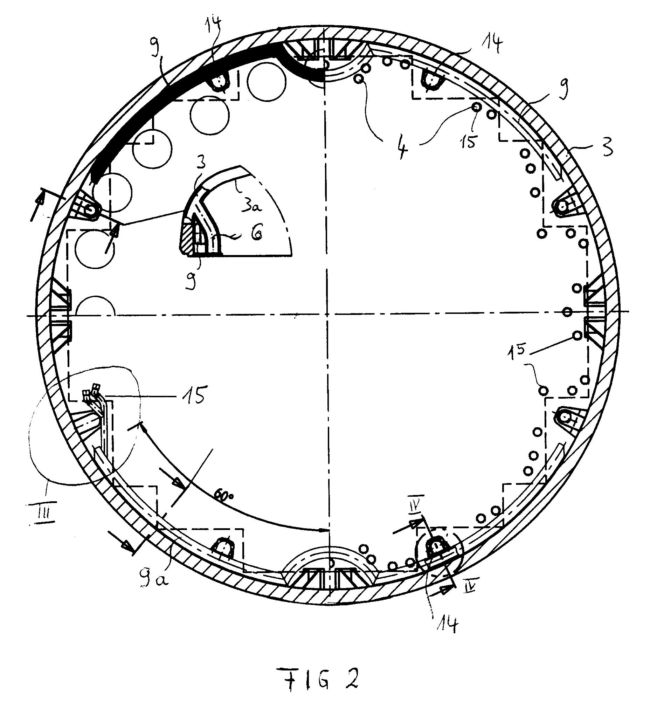

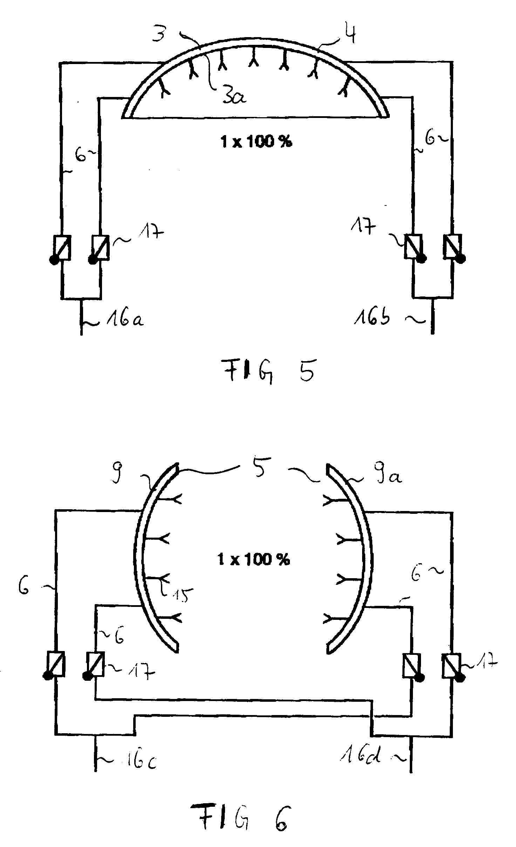

FIG 2 zeigt einen Querschnitt durch den Kerndeckel 3 in der Ebene 8 gemäß FIG 1. An der Innenwandung 3a des Kerndeckels 3 sind zwei Kreisringsegmente 9,9a eines zweiten Sprühverteilers 5 befestigt. Eine Befestigung der Kreisringsegmente 9,9a erfolgt über Schraubenverbindungen an Befestigungsvorrichtungen 14, insbesondere Tragkonsolen für die Notkühlmittel-Zuführungsleitungen. Die Kreisringsegmente 9,9a sind den geometrischen Bedingungen des Kerndeckels 3 angepaßt. FIG 4 zeigt in einer Detailvergrößerung die Befestigung des Kreisringsegmentes 9 an einer Befestigungsvorrichtung 14.

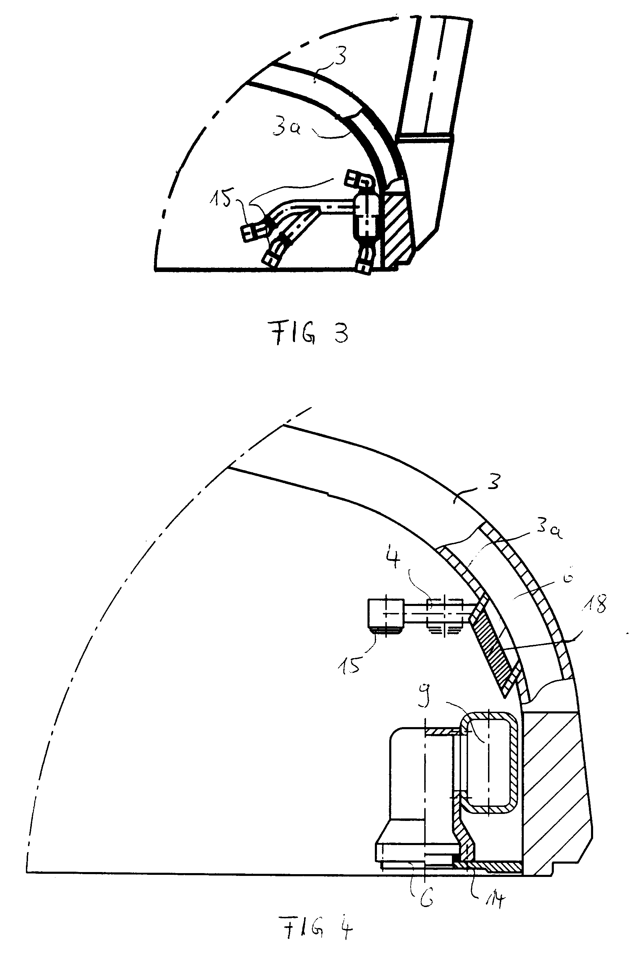

FIG 3 zeigt beispielhaft eine Anordnung von Sprühdüsen 15 an dem Kreisringsegment 9. Anzahl und Position der Sprühdüsen 15 sind gemäß den Erfordernissen an den Sprühverteiler 5 ausgelegt. Wie in FIG 2 dargestellt, können die Sprühdüsen 15 in das Innere des Kernbehälters 1 hineingeführt und in ihrer Sprührichtung nach oben, nach unten oder seitlich gerichtet sein.

Unmittelbar geodätisch oberhalb des Kreisringsegmentes zeigt FIG 4 eine Sprühdüse 15 des ersten Sprühverteilers 4. In unmittelbarer Nachbarschaft dieser Sprühdüse 15 ist der Mündungsbereich einer Notkühlmittel-Zuführungsleitung 6 dargestellt, welche für den Einbau des Kreisringsegmentes 9 von dem ersten Sprühverteiler 4 abgetrennt und mit einem Stopfen 18 verschlossen ist. Die Notkühlmittel-Zuführungsleitung 6 endet nunmehr in der Befestigungsvorrichtung 14 und dient der Einspeisung von Notkühlmittel in das Kreisringsegment 9 des zweiten Sprühverteilers 5. Die von der Notkühlmittel-Zuführungsleitung 6 abgetrennte Sprühdüse 15 des ersten Sprühverteilers 4 ist an eine andere Notkühlmittel-Zuführungsleitung angeschlossen.

FIG 5 zeigt schematisch einen Anschluß des ersten Sprühverteilers 4 an zwei Einspeisestränge 16a und 16b der insgesamt bereits vorhandenen vier Einspeisestränge des Siedewasser-Reaktors. Von jedem Einspeisestrang 16a, 16b zweigen zwei Notkühlmittel-Zuführleitungen 6 ab. In jeder der Notkühlmittel-Zuführleitungen 6 ist eine Rückschlagarmatur 17, insbesondere ein Rückschlagventil 17, vorgesehen, welche bei einem Bruch einer Notkühlmittel-Zuführleitung 6 oder eines Einspeisestranges 16a, 16b ein Rückströmen von Notkühlmittel in den anderen Einspeisestrang 16b, 16a verhindert.

FIG 6 zeigt schematisch einen Anschluß des zweiten Sprühverteilers 5, welcher hier zwei Kreisringsegmente 9, 9a aufweist, an die beiden anderen Einspeise-Stränge 16c, 16d. Jedes Kreisringsegment 9, 9a ist über eine jeweilige Notkühlmittel-Zuführleitung 6 sowohl an den Einspeisestrang 16c als auch an den Einspeisestrang 16 d angeschlossen. Jede Notkühlmittel-Zuführleitung 6 weist, wie bereits zu FIG 5 beschrieben, eine jeweilige Rückschlagarmatur 17 auf. Der zweite Sprühverteiler 5 kann auch einen geschlossenen Kreisring als einziges Kreisringsegment aufweisen, welcher wie in FIG 5 beschrieben an zwei Einspeisestränge angeschlossen ist.

Die Erfindung zeichnet sich durch eine diversitäre Notkühleinrichtung mit einem ersten Sprühverteiler und einem zweiten Sprühverteiler zur Notkühlung eines Reaktorkerns aus. Die Notkühleinrichtung wird an einem bereits bestehenden Kerndeckel eines Kernbehälters, welcher über einen längeren Zeitraum in Betrieb gewesen ist, im Zuge einer Nachrüstung hergestellt, wobei zu dem bereits bestehenden ersten Sprühverteiler der zweite Sprühverteiler in dem Kerndeckel befestigt wird. Hierbei kann auf bereits bestehenden Zuführungen für Notkühlmittel zurückgegriffen werden, wobei ein Teil der Zuführungen von dem ersten Sprühverteiler abgetrennt und an den zweiten Sprühverteiler angeschlossen wird. Im Zuge einer Ertüchtigung und Nachrüstung eines Kernbehälters können gleichzeitig der Kernmantel ausgetauscht und der Kerndeckel nachgerüstet werden, wobei von einem vollständigen Austausch des Kerndeckels, welcher auch die Dampfabscheider umfaßt, abgesehen werden kann. Hierdurch wird der Anfall von radioaktiv bestrahltem Material deutlich verringert und die Entsorgung vereinfacht.

## Patentansprüche

1. Kernbehälter (1) eines Siedewasser-Reaktors mit einem Kernmantel (2), einem doppelwandigen kuppelförmigen Kerndeckel (3) und einer Notkühleinrichtung (10), wobei
a) der Kernmantel (2) entlang einer Hauptachse (7) gerichtet ist,
b) der Kerndeckel (3) auf den Kernmantel (2) aufgesetzt ist,
c) die Notkühleinrichtung (10) einen ersten Sprühverteiler (4), der über die Innenwandung (3a) des Kerndeckels (3) verteilt ist, und einen zweiten Sprühverteiler (5), der im wesentlichen in einer Ebene (8) senkrecht zur Hauptachse (7) an der Innenwandung (3a) angeordnet ist, aufweist.

2. Kernbehälter (1) nach Anspruch 1, bei dem die Sprühverteiler (4,5) an jeweils unterschiedliche Notkühlmittel-Zuführungsleitungen (6) angeschlossen sind.

3. Kernbehälter (1) nach Anspruch 2 dessen Sprühverteiler (4,5) an jeweils mindestens zwei, insbesondere vier, Notkühlmittel-Zuführungsleitungen (6) angeschlossen sind.

4. Kernbehälter (1) nach einem der vorhergehenden Ansprüche, bei dem der zweite Sprühverteiler (5) mindestens ein Kreisringsegment (9) aufweist.

5. Kernbehälter (1) nach Anspruch 4, bei dem das Kreisringsegment (9, 9a) einen Winkel von 100° bis 140°, insbesondere etwa 120°, einschließt.

6. Kernbehälter (1) nach Anspruch 4 oder 5, der zwei Kreisringsegmente (9,9a) aufweist, die jeweils mit zwei Notkühlmittel-Zuführungsleitungen (6) verbunden sind.

7. Verfahren zur Ertüchtigung eines Kernbehälters (1) eines Siedewasser-Reaktors mit einem bestrahlten Kernmantel (2), der entlang einer Hauptachse (7) gestreckt ist, mit einem doppelwandigen kuppelförmigen Kerndeckel (3), der auf den Kernmantel (2) aufgesetzt ist, und mit einer Notkühleinrichtung (10), die einen an der Innenwandung (3a) des Kerndeckels (3) angeordneten ersten Sprühverteiler (4) aufweist, **dadurch gekennzeichnet**, daß die Notkühleinrichtung (10) durch einen zweiten, zu dem ersten Sprühverteiler (4) diversitären Sprühverteiler (5) ergänzt wird.

8. Verfahren nach Anspruch 7, wobei der zweite Sprühverteiler (5) weitgehend in einer Ebene (8) senkrecht zur Hauptachse (7) an der Innenwandung (3a) befestigt wird.

9. Verfahren nach Anspruch 7 oder 8, bei dem zwei von einer Mehrzahl, insbesondere vier, Notkühlmittel-Einspeisesträngen (14), mit denen der erste Sprühverteiler (4) verbunden ist, von diesem abgetrennt und mit dem zweiten Sprühverteiler (5) verbunden werden.

10. Verfahren nach einem der Ansprüche 7 bis 9, wobei der bestrahlte Kernmantel (2) durch einen unbestrahlten Kernmantel ersetzt wird.
